# EUROPÄISCHE PATENTSCHRIFT

(11) **EP 2 796 038 B1**
(45) Veröffentlichungstag und Bekanntmachung des Hinweises auf die Patenterteilung: **31.01.2018**
(21) Anmeldenummer: 14401045.1
(22) Anmeldetag: 16.04.2014
(51) Int. Cl.: A01M 7/00

(54) **Landwirtschaftliche Feldspritze**
Agricultural field sprayer
Pulvérisateur agricole

(30) Priorität: 25.04.2013 DE 102013104180
(43) Veröffentlichungstag der Anmeldung: 29.10.2014
(73) Patentinhaber: Amazonen-Werke H. Dreyer GmbH & Co. KG, 49205 Hasbergen (DE)
(72) Erfinder: Holtkötter, Christian, 33775 Versmold (DE)

(56) Entgegenhaltungen:
- EP-A1- 2 564 696
- EP-A2- 2 153 710
- DE-A1- 3 529 357
- DE-A1- 10 260 479
- US-A- 4 530 463

## Beschreibung

Die Erfindung betrifft eine landwirtschaftliche Feldspritze gemäß des Oberbegriffes des Patentanspruches 1.

Eine derartige landwirtschaftliche Feldspritze ist beispielsweise in der DE 102 60 479 A1 beschrieben. Die Spritzleitung der Feldspritze ist in mehrere Teilbreiten unterteilt. Jeder Teilbreite der Spritzleitung ist jeweils ein Abschaltventil zugeordnet. Über das jeweilige Abschaltventil kann jede Teilbreite der Spritzleitungen unabhängig von den übrigen Teilbreiten der Spritzleitungen zu- oder abgeschaltet werden. Die Teilbreiten der Spritzleitungen werden von einer gemeinsamen sich in die einzelnen Teilbreiten verzweigenden Spritzleitung, die an der von einem Bordrechner einstellbaren Dosierarmatur angeschlossen ist, mit der auszubringenden Flüssigkeit gespeist. Die Ausbringmenge der auszubringenden Flüssigkeit wird über die Dosierarmatur eingestellt. Wenn einzelne Teilbreiten zu- oder abgeschaltet werden, muss die Dosierarmatur, um die Ausbringmenge in gewünschter Weise konstant zu halten, entsprechend vom Bordrechner verstellt werden. Bei einer Zu- und/oder Abschaltung einzelner Teilbreiten in größeren Zeitabständen kann über den Bordrechner die Dosierarmatur ausreichend schnell nachgeregelt werden, um die Ausbringmenge entsprechend konstant zu halten. Wenn jedoch insbesondere am Feldende gleichzeitig mehrere oder alle Teilbreiten über die einzelnen Abschaltventil ab- oder zugeschaltet werden, kann die Dosierarmatur nicht ausreichend schnell nachgeregelt werden.

Der Erfindung liegt die Aufgabe zu Grunde, insbesondere für die Einsatzzyklen, bei denen mehrere oder alle Teilbreiten der Spritzleitungen zu- oder abgeschaltet werden, eine verbesserte Handhabung der Einstellung des Flüssigkeitsstromes zu schaffen.

Diese Aufgabe der Erfindung gemäß dadurch gelöst, dass von der Druckleitung zwischen dem Druckregelventil und den Abschaltventilelementen eine in die die Zuleitung und/oder den Flüssigkeitstank einmündende Abzweigleitung abzweigt, dass in der Abzweigleitung ein zu öffnendes und zu schließendes und vom Bordrechner und/oder der Abschalteinrichtung ansteuerbares Absperrventil angeordnet ist, dass in Durchflussrichtung gesehen hinter dem Absperrventil ein vorzugsweise einstellbares Druckbegrenzungsventil angeordnet ist. Infolge dieser Maßnahmen wird bei der Abschaltung ein oder mehrerer Teilbreiten der Spritzleitungen durch das jeweilige Abschaltventil zumindest ein Ersatzverbraucher geöffnet und bei der Zuschaltung ein oder mehrerer Teilbreiten der Spritzleitungen durch das jeweilige Abschaltventil wird zumindest ein Ersatzverbraucher geschlossen, so dass die Regelbreite für die Dosierarmatur bei der Zu- und Abschaltung von Teilbreiten der Spritzleitungen erheblich reduziert wird. Hierdurch wird die Regelung der Ausbringmenge der auszubringenden Flüssigkeit und der dafür erforderliche Aufwand erheblich reduziert.
Um in einfacher Weise die Anpassung des Flüssigkeitsstromes und dessen Verlaufes bei der Zu- oder Abschaltung einzelner Teilbreiten der Spritzleitungen über die Abschaltventil in einfacher Weise realisieren zu können, ist vorgesehen, dass das Absperrventil in der Abzweigleitung bei dem Absperren der Flüssigkeitszufuhr zu zumindest einer Ausbringdüse durch die Abschaltventilelemente, die von der Abschalteinrichtung, die vorzugsweise von dem Bordrechner ansteuerbar ist, in Durchflussposition schaltbar ist.

Um in einfacher Weise das erforderliche Druckniveau in dem Flüssigkeitssystem, insbesondere in den Spritzleitungen aufrecht zu erhalten, ist vorgesehen, dass das in der Abzweigleitung angeordnete Druckbegrenzungsventil auf den einen mittleren Spritzdruck entsprechenden Druckwert eingestellt und/oder einstellbar ist.
Damit das Druckniveau des Flüssigkeitsstromes in den Spritzleitungen in einfacher Weise auf dem erforderlichen Druck gehalten werden kann, ist vorgesehen, dass das in der Abzweigleitung angeordnete Druckbegrenzungsventil auf einen Druckwert von zumindest 5 bar, vorzugsweise maximal 8 bar eingestellt und/oder einstellbar ist.

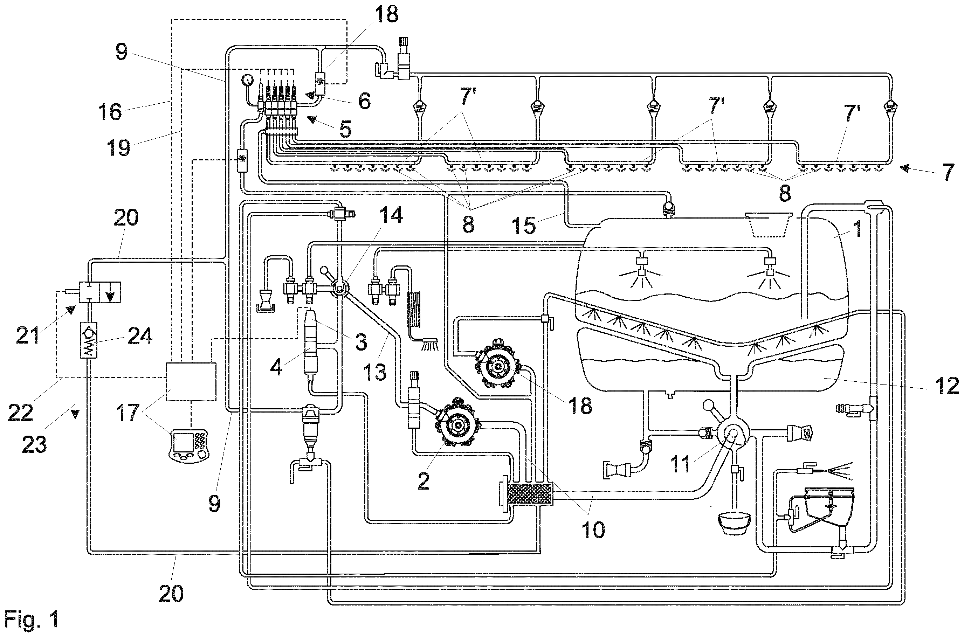

Weitere Einzelheiten der Erfindung sind der Beispielsbeschreibung und der Zeichnung zu entnehmen. Die Zeichnung zeigt
den Flüssigkeitsplan einer Feldspritze in Prinzipdarstellung.

Die Feldspritze weist unter anderem einen Flüssigkeitstank 1 zur Aufnahme der auszubringenden Pflanzenschutzmittelbrühe, eine motorisch angetriebene Pumpe 2, ein über einen Stellmotor 3 einstellbares Regelventil 4 aufweisende Dosierarmatur, die als Abschaltventile ausgebildeten Teilbreitenschaltventile 5 mit den motorischen Einstellgliedern 6, die zu den einzelnen Teilbreiten 7'der Spritzleitungen 7 mit Spritzdüsen 8 bestückten Verteilergestänge führende Spritzleitung 9 auf.

Auf der Saugseite der Pumpe 2 ist die Saugleitung 10 angeschlossen, die unter Zwischenschaltung eines zentralen Umschaltventils 11 im unteren Bereich des Flüssigkeitstank 1 mündet. An dem Umschaltventil 11 können noch weitere Leitungen zum externen Anschluss von Wassertanks, Vorrichtungen zum Ansaugen von Wasser aus Gewässern, zum Anschluss des Klarwasserbehälters 12 sowie eine Ablaufleitung angeschlossen sein. Auf der Druckseite der Pumpe 2 ist eine Druckleitung 13 angeordnet, die unter Zwischenschaltung eines weiteren Umschaltventils 14 zu dem Regelventil 4 der Dosierarmatur und weiterer Einrichtungen der Feldspritze führt. Die verschiedenen Rücklaufleitungen sind zu einer Sammelrücklaufleitung 15 zusammengefasst. Die Rücklaufleitung 15 mündet in dem Vorratstank 1.

In der von den dem Regelventil 4 zu den Teilbreitenleitungen 7 führenden Spritzleitung 9 ist der über die Signalleitung 16 mit dem Bordrechner 17 verbundene Durchflussmesser 18 angeordnet.

Die motorischen Einstellglieder 6 der Teilbreitenschaltventile 5 sind über die Signalleitungen 19 mit dem Bordrechner 17 verbunden und können so von diesem entsprechend angesteuert werden, so dass die einzelnen Teilbreiten 7' der Spritzleitungen 7 durch Betätigen der Einstellglieder 6 die einzelnen Teilbreitenschaltventile 5 entsprechend geschaltet werden, um die einzelnen Teilbreiten zu- oder abzuschalten.
Von der Druckleitung 9 zwischen dem Druckregelventil 4 und den als Abschalteinrichtungen ausgebildeten Teilbreitenschaltventilen 5 zweigt eine Abzweigleitung 20 ab. Die Abzweigleitung 20 mündet in die als Saugleitung 10 ausgebildete Zuleitung im Bereich des Filters ein. Auch kann die Abzweigleitung 20 in nicht dargestellter Weise unmittelbar in den Flüssigkeitstank 1 einmünden. In der Abzweigleitung 20 ist ein zu öffnendes und zu schließendes Absperrventil 21 angeordnet. Das Absperrventil 21 ist über die Signalleitung 22 mit dem Bordrechner 17 verbunden. Auch ist es möglich, dass das Absperrventil 21 über eine nicht dargestellte Signalleitung mit der motorische Einstellglieder 6 aufweisenden Abschalteinrichtung 5 verbunden ist. Das Absperrventil 21 ist somit über ein entsprechendes Signal vom Bordrechner 17 zu öffnen oder zu schließen. In Durchflussrichtung 23 gesehen ist hinter dem Absperrventil 21 ein vorzugsweise einstellbares Druckbegrenzungsventil 24 angeordnet. Das in der Abzweigleitung 20 angeordnete Druckbegrenzungsventil 24 ist auf einen dem mittleren Spritzdruck der Feldspritze entsprechenden Druckwert eingestellt oder auf diesen einstellbar. Hierbei ist das Druckbegrenzungsventil auf einen Druckwert von zumindest 5 bar, vorzugsweise maximal 8 bar eingestellt oder einstellbar.
Das Absperrventil 21 wird beim Absperren der Flüssigkeitszufuhr zu zumindest einer Ausbringdüse 8 und/oder Teilbreite 7 über die von dem Bordrechner 17 ansteuerbaren Einstellglieder 6 durch die Teilbreitenschaltventile 5 in Durchflussposition geschaltet. In dieser Durchflussposition bildet das Druckbegrenzungsventil 24 einen Ersatzverbraucher. Die an sich über die Ausbringdüsen 8 der abgeschalteten Teilbreite 7' ausgestoßene Flüssigkeitsmenge wird so über die Abzweigleitung 20 wieder in das Flüssigkeitssystem der Feldspritze eingespeist.

Wenn abgeschaltete Teilbreiten 7' wieder zugeschaltet werden, dann wird entsprechend über den Bordrechner 17 die Abzweigleitung 20 durch Umschalten des Absperrventils 21 die Abzweigleitung 20 abgesperrt.

Durch die wahlweise Öffnung und Schließung der Abzweigleitung 20 im Wechsel mit der Zu- und Abschaltung der Teilbreiten 7' der Spritzleitungen 7 über den Bordrechner 7 und den angesteuerten motorischen Einstellgliedern 6 der verschiedenen Ventile 5 wird die erforderliche Regelbandbreite des Druckregelventils 4 infolge der Zu- und Abschaltung der Teilbreiten 7'der Spritzleitungen 7 klein gehalten.

## Patentansprüche

1. Landwirtschaftliche Feldspritze mit zumindest einem Flüssigkeitstank (1), zumindest einer Pumpe (2) mit zumindest einer Zuleitung (10), zumindest einer zumindest ein Druckregelventil (4) aufweisenden Dosierarmatur, zumindest einer in den Flüssigkeitstank (1) einmündenden Rücklaufleitung (15) und zumindest einer sich in mehrere Spritzleitungen (7, 7') verzweigenden und die von einem Bordrechner (17) einstellbare Dosierarmatur aufweisende Druckleitung (9), wobei die Spritzleitungen (7,7') jeweils zu Ausbringdüsen (8) eines Verteilergestänges führen, wobei die Flüssigkeitszufuhr zu den Ausbringdüsen (8) über in den Spritzleitungen (7,7') angeordneten und von einer Abschalteinrichtung (5, 6), die vorzugsweise von dem Bordrechner (17) ansteuerbar ist, betätigbaren Abschaltventilelementen (5) zu- und abschaltbar sind, **dadurch gekennzeichnet, dass** von der Druckleitung (9) zwischen dem Druckregelventil (4) und den Abschaltventilelementen (5) eine in die die Zuleitung (10) und/oder den Flüssigkeitstank (1) einmündende Abzweigleitung (20) abzweigt, dass in der Abzweigleitung (20) ein zu öffnendes und zu schließendes und vom Bordrechner (17) und/oder der Abschalteinrichtung (5, 6) ansteuerbares Absperrventil (21) angeordnet ist, dass in Durchflussrichtung (23) gesehen hinter dem Absperrventil (21) ein vorzugsweise einstellbares Druckbegrenzungsventil (24) angeordnet ist.

2. Landwirtschaftliche Feldspritze nach Anspruch 1, **dadurch gekennzeichnet, dass** das Absperrventil (21) in der Abzweigleitung (20) bei dem Absperren der Flüssigkeitszufuhr zu zumindest einer Ausbringdüse (8) durch die Abschaltventilelemente (5), die von der Abschalteinrichtung (6), die vorzugsweise von dem Bordrechner (17) ansteuerbar ist, in Durchflussposition schaltbar ist.

3. Landwirtschaftliche Feldspritze nach zumindest einem der vorstehenden Ansprüche, **dadurch gekennzeichnet, dass** das in der Abzweigleitung (20) angeordnete Druckbegrenzungsventil (24) auf den einen mittleren Spritzdruck entsprechenden Druckwert eingestellt und/oder einstellbar ist.

4. Landwirtschaftliche Feldspritze nach zumindest einem der vorstehenden Ansprüche, **dadurch gekennzeichnet, dass** das in der Abzweigleitung (20) angeordnete Druckbegrenzungsventil (24) auf einen Druckwert von zumindest 5 bar, vorzugsweise maximal 8 bar eingestellt und/oder einstellbar ist.

## Claims

1. Agricultural field sprayer having at least one liquid tank (1), at least one pump (2) with at least one feed line (10), at least one metering valve having at least one pressure-regulating valve (4), at least one return line (15) opening into the liquid tank (1) and at least one pressure line (9) which branches into a plurality of spray lines (7, 7') and has the metering valve which is adjustable by an on-board computer (17), wherein the spray lines (7, 7') each lead to discharge nozzles (8) of a distributor linkage, wherein the liquid supply to the discharge nozzles (8) can be switched on and off via switch-off valve elements (5) which are arranged in the spray lines (7, 7') and are actuable by a switch-off device (5, 6) which is preferably activatable by the on-board computer (17), **characterized in that** a branch line (20) branches off from the pressure line (9) between the pressure-regulating valve (4) and the switch-off valve elements (5) and leads into the feed line (10) and/or into the liquid tank (1), **in that** a shut-off valve (21) which can be opened and can be closed and is activatable by the on-board computer (17) and/or the switch-off device (5, 6) is arranged in the branch line (20), **in that** a preferably adjustable pressure-limiting valve (24) is arranged behind the shut-off valve (21), as seen in the throughflow direction (23).

2. Agricultural field sprayer according to Claim 1, **characterized in that**, when the liquid supply to at least one discharge nozzle (8) is shut off by the switch-off valve elements (5), the shut-off valve (21) in the branch line (20) can be switched into the throughflow position by the switch-off device (6) which is preferably activatable by the on-board computer (17).

3. Agricultural field sprayer according to at least one of the preceding claims, **characterized in that** the pressure-limiting valve (24) which is arranged in the branch line (20) is adjusted and/or is adjustable to the pressure value corresponding to an average spray pressure.

4. Agricultural field sprayer according to at least one of the preceding claims, **characterized in that** the pressure-limiting valve (24) which is arranged in the branch line (20) is adjusted and/or is adjustable to a pressure value of at least 5 bar, preferably at maximum 8 bar.

## Revendications

1. Pulvérisateur agricole comprenant au moins un réservoir de liquide (1), au moins une pompe (2) avec au moins une conduite d'alimentation (10), au moins un ensemble de dosage présentant au moins une soupape de régulation de pression (4), au moins une conduite de retour (15) débouchant dans le réservoir de liquide (1) et au moins une conduite sous pression (9) se ramifiant en plusieurs conduites de pulvérisation (7, 7') et présentant l'ensemble de dosage réglable par un ordinateur de bord (17), dans lequel les conduites de pulvérisation (7, 7') conduisent respectivement à des gicleurs de projection (8) d'une rampe de distributeur, dans lequel la fourniture de liquide aux gicleurs de projection (8) peut être connectée et déconnectée par des éléments de soupape d'arrêt (5) disposés dans les conduites de pulvérisation (7, 7') et actionnables par un dispositif d'arrêt (5, 6), qui peut être commandé de préférence par l'ordinateur de bord (17), **caractérisé en ce qu'**une conduite de dérivation (20) débouchant dans la conduite d'alimentation (10) et/ou dans le réservoir de liquide (1) est dérivée de la conduite sous pression (9) entre la soupape de régulation de pression (4) et les éléments de soupape d'arrêt (5), **en ce qu'**une vanne d'arrêt (21) à ouvrir et à fermer et pouvant être commandée par l'ordinateur de bord (17) et/ou le dispositif d'arrêt (5, 6) est disposée dans la conduite de dérivation (20), et **en ce que**, en considérant la direction d'écoulement (23), une soupape de limitation de pression (24) de préférence réglable est disposée après la vanne d'arrêt (21).

2. Pulvérisateur agricole selon la revendication 1, **caractérisé en ce que** la vanne d'arrêt (21) dans la conduite de dérivation (20) peut être commutée en position d'écoulement lors de l'arrêt de l'alimentation de liquide à au moins un gicleur de projection (8) par les éléments de soupape d'arrêt (5), par le dispositif d'arrêt (6), qui peut être commandé par l'ordinateur de bord (17).

3. Pulvérisateur agricole selon au moins une des revendications précédentes, **caractérisé en ce que** la soupape de limitation de pression (24) disposée dans la conduite de dérivation (20) est et/ou peut être réglée à la valeur de pression correspondant à une pression de pulvérisation moyenne.

4. Pulvérisateur agricole selon au moins une des revendications précédentes, **caractérisé en ce que** la soupape de limitation de pression (24) disposée dans la conduite de dérivation (20) est et/ou peut être réglée à une valeur de pression d'au moins 5 bar, de préférence d'au maximum 8 bar.
